# EUROPÄISCHE PATENTANMELDUNG

(11) **EP 2 687 080 A2**
(43) Veröffentlichungstag der Anmeldung: **22.01.2014**
(21) Anmeldenummer: 13162099.9
(22) Anmeldetag: 03.04.2013
(51) Int. Cl.: A01D 45/02

(54) **Vorsatzgerät zum Ernten von Mais**

(30) Priorität: 20.07.2012 DE 102012106602
(71) Anmelder: CLAAS Hungaria Kft., 5200 Törökszentmiklos (HU)
(72) Erfinder: Tilly, Thomas, 48231 Warendorf (DE); Engler, Thomas Dennis, 87656 Germaningen (DE)

(57) **Zusammenfassung**

Ein Vorsatzgerät (1) zum Ernten von Mais für einen selbstfahrenden Mähdrescher weist Ernteeinrichtungen (2, 3) zum Erfassen und Führen der Maisstängel, zum Pflücken der Maiskolben und zum Fördern der gepflückten Maiskolben auf. Zu diesem Zweck ist das Vorsatzgerät (1) mit sich über seine Breite erstreckenden Einzugseinrichtungen, den Einzugseinrichtungen in Richtung des Erntegutflusses nachgeordneten Pflückeinrichtungen (2), die im Wesentlichen aus gegenläufig rotierenden Pflückwalzen bestehen, sowie mit einem mit gegenläufigen Schneckenabschnitten versehenen Querförderer (3) versehen, über welchen Querförderer (3) geerntete Maiskolben mittig des Vorsatzgerätes (1) zusammenführbar und dort einem Schrägförderer zuführbar sind. Die Einzugseinrichtungen und/oder die Pflückwalzen und/oder der Querförderer (3) sind über zumindest ein Abtriebselement (5) des Mähdreschers antreibbar. Dabei soll das zumindest eine Abtriebselement (5) mit zumindest einem stufenlos verstellbaren Getriebe verbunden sein, welches am Vorsatzgerät (1) angeordnet ist und eine unmittelbar oder mittelbar mit einer Antriebswelle der Einzugseinrichtungen und/oder einer Antriebswelle (44) der Pflückwalzen und/oder einer Antriebswelle (40) des Querförderers (3) und/oder einer Hauptantriebswelle einer Häckseleinrichtung (4) zum Häckseln der Maisstängel verbundene Ausgangswelle (14) aufweist.

## Beschreibung

Die Erfindung betrifft gemäß dem Oberbegriff der Patentansprüche 1 und 2 ein Vorsatzgerät zum Ernten von Mais für einen selbstfahrenden Mähdrescher mit Ernteeinrichtungen zum Erfassen und Führen der Maisstengel, zum Pflücken der Maiskolben und zum Fördern der gepflückten Maiskolben, welches Vorsatzgerät sich über seine Breite erstreckende Einzugseinrichtungen, den Einzugseinrichtungen in Richtung des Erntegutflusses nachgeordnete Pflückeinrichtungen, die im Wesentlichen aus gegenläufig rotierenden Pflückwalzen besteht, sowie einen mit gegenläufigen Schneckenabschnitten versehenen Querförderer aufweist, über welchen geerntete Maiskolben mittig des Vorsatzgerätes zusammenführbar und dort einem Schrägförderer zuführbar sind, wobei die Einzugseinrichtungen und/oder die Pflückwalzen und/oder der Querförderer über zumindest ein Abtriebselement des Mähdreschers antreibbar ist bzw. sind.

Die Hackfrucht Mais wird im Allgemeinen als Reihenkultur mit einem Reihenabstand von ca. 75 cm angebaut, wobei die Aussaat mittels Einzelkornsaat erfolgt und die ausgewachsenen Maispflanzen eine Wuchshöhe von bis zu drei Metern erreichen können. Dabei besteht die Maispflanze im Wesentlichen aus einem Maisstängel, bis zu einem Meter langen Maisblättern sowie Fruchtständen, die als von Hüllblättern umschlossene Maiskolben ausgebildet sind. Es gibt zwei wesentliche Arten der Maisernte, nämlich zum einen die Ernte als Futtermais oder Biomasse mittels eines Feldhäckslers und zum anderen die Ernte von Körnermais mittels eines mit einem entsprechenden Vorsatzgerät versehenen Mähdreschers. Mit dem Feldhäcksler wird die gesamte Maispflanze einschließlich der Maiskörner zerkleinert, um diese anschließend in Form von Silomais als Futtermittel zu verwenden. In dieser zerkleinerten Form kann die Maispflanze auch als Biomasse Biogasanlagen zugeführt werden. Die für die Ernte der Maispflanzen verwendeten Feldhäcksler verarbeiten, wie bereits dargelegt, die gesamte Maispflanze, so dass der Fruchtstand, also der die Maiskörner aufnehmende Maiskolben nicht von den übrigen Pflanzenbestandteilen entfernt werden muss.

Demgegenüber wird bei der Ernte von Körnermais mit einem Mähdrescher dessen zur Getreideernte dienendes Schneidwerk gegen ein Vorsatzgerät für die Maisernte ausgetauscht. Dieses Vorsatzgerät verfügt über mehrere Ernteeinrichtungen, nämlich über Einzugseinrichtungen, die den jeweiligen Maisstängel erfassen und innerhalb einer Führungsbahn führen, über eine Pflückeinrichtung, die für einen kontrollierten Einzug der gesamten Maispflanze und ein Entfernen des Maiskolbens von dem Maisstängel sorgt, und einen Querförderer, der die von den einzelnen Maisstängeln getrennten Maiskolben mittig des Vorsatzgerätes in dessen Mulde zusammenzieht und an einen Schrägförderer übergibt. Dieser Schrägförderer ist allerdings Bestandteil des Mähdreschers, d.h., beim Ankuppeln des Erntevorsatzes an den Mähdrescher wird dieser mit dem Schrägförderer verbunden, der die Maiskolben während des Erntevorganges einem Dreschwerk des Mähdreschers zuführt. Ein entsprechendes Vorsatzgerät, in welchem derartige Ernteeinrichtungen vorgesehen sind, ist Gegenstand der vorliegenden Erfindung.

Während des Pflückvorgangs wird der jeweilige Maisstängel in Richtung des Bodens gezogen, wobei er während dieser Bewegung über ggfs. vorhandene Häckselmesser einer Häckselvorrichtung, die auf einer vertikal verlaufenden Messerwellen angeordnet sind, bodennah abgeschnitten, zerkleinert und auf dem Feld abgelegt wird. Darüber hinaus bestehen aber auch Möglichkeiten, eine als Mulchgerät oder Schlegelmäher ausgebildete Häckseleinrichtung unterhalb des Schrägförderers des Mähdreschers oder an der Rückwand des Vorsatzgerätes vorzusehen. Die Häckseleinrichtung soll für eine vollständige Zerkleinerung des aus Blattanteilen der Maispflanzen und der Maisstängel bestehenden Maisstrohs sorgen, damit dieses gleichmäßiger über den Boden verteilt ist und bei einer anschließenden Bodenbearbeitung vollständig in diesen eingearbeitet werden kann. Das vollständige Einarbeiten des Maisstrohs in den Boden und die gleichmäßig Vermischung mit diesem zur Förderung von dessen Verrottung ist zur Vermeidung von Schädlingsbefall, wie z.B. dem Befall mit Fusariosen oder Maiszünslern, von erheblicher Bedeutung.

Wie bereits dargelegt, kann ein Mähdrescher, je nachdem, ob einerseits Getreide sowie Raps oder andererseits Mais geerntet werden soll, mit völlig unterschiedlichen Erntevorsätzen ausgerüstet werden, die dann an den Schrägförderer und an zumindest ein Abtriebselement des Mähdreschers gekuppelt werden. Dabei unterscheiden sich die Erntevorsätze auch hinsichtlich der Variabilität der innerhalb der Erntevorsätze zur Verfügung zu stellenden Drehzahlen für die Erntevorrichtungen. In Abhängigkeit von der Bestandsdichte, der Stängellänge und der Feuchtigkeit des Mais muss nämlich beispielsweise die Drehzahl der Pflückwalzen variiert werden. Entsprechende Mittel für eine derartige Drehzahlverstellung der am Erntevorsatz angeordneten Ernteeinrichtungen ist bislang am Mähdrescher vorgesehen. Wenn der Mähdrescher, wie das aber relativ häufig der Fall ist, nur für die Getreideernte eingesetzt wird, ist diese die Herstellkosten des Mähdreschers erhöhende Drehzahlverstellung für einen Maiserntevorsatz völlig überflüssig.

Ein Vorsatzgerät zum Ernten von Mais der im Oberbegriff der unabhängigen Patentansprüche 1 und 2 angegebenen Gattung ist aus der DE 10 2005 021 792 A1 bekannt. Dieses Vorsatzgerät, das in dem Dokument als Pflücker bezeichnet wird, ist an einem Schrägförderer eines Mähdreschers lösbar befestigt. Eine Schrägfördererwelle dieses Schrägförderers wird über einen Kettentrieb vom Mähdrescher aus angetrieben wird und steht mit einem Ende über die seitliche Erstreckung eines Schrägförderergehäuses vor, so dass ein Wellenstummel gebildet wird, mit welchem eine Gelenkwelle verbunden ist. Diese Gelenkwelle steht andererseits mit einer Eingangswelle eines Schaltgetriebes in Verbindung. Eine Ausgangswelle des Schaltgetriebes treibt über ein Ritzel und eine Kette einen Querförderer an, von dessen Antriebswelle wiederum ein Kettentrieb ausgeht, der zum Antrieb einer Querwelle der Pflückeinrichtung dient. Diese Querwelle weist zwei Winkelgetriebe auf, über welche in Längsrichtung des Vorsatzgerätes verlaufende Wellen wiederum über jeweils drei Winkelgetriebe Pflückwalzenpaare sowie Einrichtungen zum Erfassen und Führen der Maisstängel antreiben.

Es ist Aufgabe der vorliegenden Erfindung, ein Antriebssystem für ein zum Ernten von Mais vorgesehenes Vorsatzgerät eines Mähdreschers zu schaffen, das eine optimale Anpassung des Betriebs der einzelnen Ernteeinrichtungen an die jeweiligen Erntebedingungen ermöglicht, wobei eine entsprechende Steuerung unterschiedlicher Antriebsdrehzahlen realisiert werden kann, ohne die Kosten des Mähdreschers, der universell einsetzbar sein soll, zu erhöhen.

Diese Aufgabe wird, ausgehend vom Oberbegriff des Patentanspruchs 1, in Verbindung mit dessen kennzeichnenden Merkmalen gelöst. Die von diesem abhängigen weiteren Patentansprüche geben jeweils vorteilhafte Weiterbildungen der Erfindung wieder.

Gemäß dem kennzeichnenden Teil des Patentanspruchs 1 soll das zumindest eine Abtriebselement mit einem stufenlos verstellbaren Getriebe verbunden sein, welches am Vorsatzgerät angeordnet ist und eine unmittelbar oder mittelbar mit einer Antriebswelle der Einzugseinrichtungen und/oder einer Antriebswelle der Pflückwalzen und/oder einer Messerwelle einer Häckseleinrichtung zum Häckseln der Maisstängel verbundene Ausgangswelle aufweist. Die Erfindung zielt folglich darauf ab, Antriebseinrichtungen, die mit den vorgenannten Ernteeinrichtungen verbunden sind und die Möglichkeit einer Veränderung der Antriebsdrehzahlen an diesen Ernteeinrichtungen schaffen, unmittelbar dem Vorsatzgerät zuzuordnen, so dass der Mähdrescher unabhängig davon, welches Vorsatzgerät an diesen angekuppelt ist, universell eingesetzt werden kann. An das Abtriebselement des Mähdreschers können somit sowohl Schneidwerke zum Ernten von Getreide und Raps als auch Vorsatzgeräte zum Ernten von Mais angekuppelt werden, ohne dass für den bestimmungsgemäßen Gebrauch der Vorsatzgeräte, also im Hinblick auf das jeweilige Erntegut bestimmte Änderungen hinsichtlich der Drehzahl des Abtriebselements vorzunehmen sind.

Weiterhin wird durch die Erfindung die Möglichkeit geschaffen, die einzelnen Ernteeinrichtungen des Vorsatzgerätes, d. h. die Einzugseinrichtungen, die Pflückwalzen, die Querförderer oder ggf. die Häckseleinrichtung zum Teil mit übereinstimmenden Drehzahlen und zum Teil mit voneinander abweichenden Drehzahlen anzutreiben, wobei diese Verstellung unter Berücksichtigung des Zustands des Ernteguts erfolgen soll. Damit hierbei ein optimaler Betrieb zu erzielen ist, sollen diese Verstellvorgänge mit Hilfe zumindest eines stufenlos verstellbaren Getriebes, also mit sehr feiner Abstimmung erfolgen.

Demgegenüber ist nach der DE 10 2005 021 792 A1 zwischen dem Abtriebselement des Mähdreschers und dem Zugmitteltrieb, der sowohl den Querförderer als auch die Pflückwalzen sowie die Einzugseinrichtungen antreibt, ein Schaltgetriebe vorgesehen, über welches die Ernteeinrichtungen mit einem konstanten Verhältnis der Drehzahlen angetrieben werden. Die Antriebsdrehzahl des Zugmitteltriebs kann dabei offenbar nur in Stufen entsprechend der Schaltung dieses Schaltgetriebes verändert werden, wobei im Einzelnen nicht angegeben ist, wie eine entsprechende Verstellung erfolgen soll und wie viele Schaltstufen vorgesehen sind.

Gemäß der vorliegenden Erfindung werden die unterschiedlichen Zustände des Erntegutes Mais erfasst und daraufhin die Drehzahlen der einzelnen Ernteeinrichtungen des Vorsatzgerätes variiert. Bei den Erntegutzuständen, die als Parameter für eine entsprechende Verstellung herangezogen werden, kann es sich um die Wuchshöhe der Maispflanzen und/oder die Bestandsdichte und/oder die Feuchtigkeit der Maiskolben handeln. Diese Zustände des Erntegutes können sowohl über eine entsprechende Sensorik als auch manuell von dem Fahrer erfasst werden, wobei er in entsprechender Weise die Antriebsdrehzahlen der Ernteeinrichtungen variiert.

Dabei kommt es darauf an, diese Drehzahlen über einen großen Bereich stufenlos zu variieren. Die erfindungsgemäßen Merkmale lassen weiterhin erkennen, dass die angegebenen Ernteeinrichtungen derart angetrieben werden, dass sich deren Drehzahlen sowohl unabhängig voneinander als auch, in Gruppen zusammengefasst, gemeinsam verstellen lassen. Dabei besteht beispielsweise die Möglichkeit, die Pflückeinrichtung und den Querförderer gemeinsam über das stufenlos verstellbare Getriebe anzutreiben, so dass die Antriebsdrehzahlen dieser beiden Elemente der Ernteeinrichtung in einer fixen Relation zueinander stehen.

Weiterhin kann über das vom Abtriebselement des Mähdreschers angetriebene stufenlos verstellbare Getriebe auch eine Messerwelle einer Häckseleinrichtung zum Häckseln der Maisstängel angetrieben werden. Wesentlich ist im Übrigen die Anordnung des stufenlos verstellbaren Getriebes am Vorsatzgerät, damit entsprechende Verstelleinrichtungen nicht Bestandteil des Mähdreschers sind. Wie bereits dargelegt, wird der Mähdrescher universell eingesetzt, d. h., an dem Mähdrescher können wahlweise ein Getreideschneidwerk zum Ernten von Getreide sowie Raps oder das vorstehend erläuterte Vorsatzgerät angeordnet sein. Da eine Variation der Antriebsdrehzahlen der Pflückwalzen und des Querförderers spezifisch für den Betrieb des Mähdreschers mit einem zum Ernten von Mais versehenen Vorsatzgerätes sind, wären diese bei der ausschließlichen Verwendung des Mähdreschers zum Ernten von Getreide, was in bestimmten Regionen üblich ist, völlig überflüssig und würden die Herstellungskosten des Mähdreschers in unerwünschtem Maße erhöhen. Aus diesem Grund ist die entsprechende Drehzahlverstelleinrichtung, also das stufenlos verstellbare Getriebe ausschließlich Bestandteil des Vorsatzgerätes.

Weiterhin soll das zumindest eine stufenlos verstellbare Getriebe über eine Gelenkwelle an das zumindest eine Abtriebselement kuppelbar sein und über zumindest einen nachgeschalteten Zugmitteltrieb zumindest eine der Ernteeinrichtungen antreiben. Die von dem jeweiligen stufenlos verstellbaren Getriebe ausgehende Ausgangswelle steht folglich mit einem oder mehreren Zugmitteltrieben in Verbindung, wobei bei Verwendung mehrerer Zugmitteltriebe unterschiedliche Übersetzungsverhältnisse für die von diesen angetriebenen Ernteeinrichtungen vorgegeben sind. Die Gelenkwelle ist üblicherweise mit einem Kuppelelement versehen, mit welchem sie an das Abtriebselement des Mähdreschers kuppelbar ist.

Alternativ zu der Lösung nach dem Patentanspruch 1 soll gemäß dem unabhängigen Patentanspruch 2 das Abtriebselement mit einem mehrstufigen Schaltgetriebe verbunden sein, welches am Vorsatzgerät angeordnet ist und eine Ausgangswelle aufweist, die ausschließlich unmittelbar oder mittelbar mit einem Antrieb der Pflückwalzen und des Querförderers verbunden ist. Mit dieser Anordnung des Schaltgetriebes wird erreicht, dass sich das Übersetzungsverhältnis im Antrieb der Pflückwalzen und des Querförderers unabhängig vom Antrieb der übrigen Ernteeinrichtungen und ggf. einer Häckseleinrichtung verstellen lässt. Dieses Schaltgetriebe ist ebenfalls dem Vorsatzgerät zugeordnet und wird vom Abtriebselement des Mähdreschers aus über eine Gelenkwelle angetrieben. Bei einer Anbringung des Vorsatzgerätes am Schrägförderer des Mähdreschers ist die Gelenkwelle in entsprechender Weise an das Abtriebselement anzukuppeln. Darüber hinaus ist es möglich, für den Antrieb der Einzugseinrichtungen und ggf. auch für den Antrieb der Häckseleinrichtung weitere separate mehrstufige Schaltgetriebe vorzusehen.

In weiterer Ausgestaltung der im Patentanspruch 1 angegebenen Erfindung soll das zumindest eine stufenlos verstellbare Getriebe als Variatorgetriebe ausgebildet sein, welches eine Primärscheibe und eine Sekundärscheibe aufweist, die unmittelbar oder mittelbar am Erntevorsatz gelagert sind. Die Primärscheibe ist dabei drehfest mit einer an das Abtriebselement kuppelbaren Gelenkwelle verbunden, während die Sekundärscheibe mittelbar oder unmittelbar mit einem Antriebselement der Einzugseinrichtungen und/oder einem Antriebselement einer der Pflückwalzen und/oder einem Antriebselement des Querförderers und/oder einem Antriebselement der Messerwelle der Häckseleinrichtung in Verbindung steht. Sowohl die Primär- als auch die Sekundärscheibe bestehen aus Kegelscheiben, von welchen jeweils eine ortsfest und eine in axialer Richtung zu dieser verschiebbar ausgebildet sind. Dabei kann beispielsweise eine der verschiebbaren Kegelscheiben hydraulisch verstellt werden, während die andere Kegelscheibe dieser Verstellung unter Beibehaltung der Riemenvorspannkraft synchron folgt. Alternativ dazu kann das stufenlos verstellbare Getriebe auch als hydrostatisches Getriebe ausgebildet sein.

Außerdem ist vorgesehen, dass das Abtriebselement als ein Ende einer Schrägfördererwelle ausgebildet ist, an das die Gelenkwelle kuppelbar ist, und dass an ein zweites Ende der Schrägfördererwelle, das ebenfalls als Wellenstummel über das Schrägförderergehäuse vorsteht, eine weitere Gelenkwelle kuppelbar ist. Diese soll über einen weiteren Zugmitteltrieb trieblich mit der Messerwelle verbunden sein. Somit ist die Schrägfördererwelle, die im Inneren des Schrägförderergehäuses Zahnräder zum Antrieb der Förderketten und damit verbundener Förderleisten aufnimmt, beidseitig aus dem Schrägförderergehäuse herausgeführt. Auf der einen Seite des Schrägförderergehäuses befindet sich der Abtrieb, der mit der Häckseleinrichtung in Verbindung steht, während das von diesem abgewandte Ende der Schrägfördererwelle den anderen Abtrieb für die übrigen Ernteeinrichtungen aufweist. Daraus ergibt sich eine den am Vorsatzgerät vorhandenen Bauraum optimal ausnutzende Anordnung.

Weiterhin soll eine das stufenlos verstellbare Getriebe antreibende Gelenkwelle mit einem Antrieb einer Hydraulikpumpe verbunden sein. Diese Hydraulikpumpe, die für eine Druckmittelversorgung der Verstelleinrichtungen und/oder eventueller hydrostatischer Antriebseinrichtungen im Vorsatzgerät dient, ist somit ebenfalls in vorteilhafter Weise direkt dem Vorsatzgerät zugeordnet und nicht Bestandteil des Mähdreschers. Dabei kann die Hydraulikpumpe auch eine Baueinheit mit einem Ölkühler bilden.

Da beim Ernten von Mais Steine oder andere Fremdkörper in das Vorsatzgerät gelangen und Bauelemente von dessen Ernteeinrichtungen sowie eine Drescheinrichtung des nachfolgenden Mähdreschers beschädigen können, sollen zwischen dem Antriebselement und einer Welle des Querförderers und/oder einem Antriebselement der Pflückwalzen zumindest eine Überlastkupplung angeordnet sein. Eine entsprechende Überlastkupplung kann dabei aus Scherbolzen oder aus radial bzw. axial geführten Stiften bestehen, die über Federn abgestützt sind und mit ihrem einen Ende in eine Nut einer benachbarten Nabe eingreifen. Es besteht die Möglichkeit, eine entsprechende Überlastkupplung an der Ausgangswelle des stufenlos verstellbaren Getriebes vorzusehen, so dass sowohl der Antrieb der Pflückwalzen als auch des Querförderers abgesichert ist.

Zur Erzielung einer optimalen Raumausnutzung soll das stufenlos verstellbare Getriebe hinter einer Rückwand des Vorsatzgerätes angeordnet sein. Die entsprechende Unterbringung des stufenlosen Getriebes weist den Vorteil auf, dass durch dessen Anordnung die Breite des Vorsatzgerätes nicht erhöht wird.

Außerdem ist in Verbindung mit den Merkmalen des Patentanspruchs 4 vorgesehen, dass die von der Sekundärscheibe ausgehende Ausgangswelle den Querförderer über einen Kettentrieb und die Pflückwalzen über einen Riementrieb antreibt. Auf der Ausgangswelle sind somit eine Antriebsriemenscheibe und ein Kettenritzel nebeneinander angeordnet.

In weiterer Ausgestaltung der Erfindung soll das zumindest eine stufenlos verstellbare Getriebe in Abhängigkeit von der Feuchtigkeit und/oder der Bestandsdichte und/oder der Stängellänge der Maispflanzen verstellbar sein. Die entsprechenden Parameter können dabei, wie bereits dargelegt, über entsprechende Sensoren, Kameras usw. oder über den Fahrer des Mähdreschers erfasst werden. Bestandteil des Vorsatzgerätes oder des Mähdreschers ist dabei eine Regeleinrichtung, die über Signalleitungen mit den Sensoren, Kameras usw. in Verbindung steht und die über eine hydraulische Steuereinrichtung das Übersetzungsverhältnis des zumindest einen stufenlos verstellbaren Getriebes fortlaufend den entsprechenden Bedingungen anpassen kann. Dabei wird diese Regeleinrichtung vorzugsweise am Vorsatzgerät angeordnet sein, damit diese baulich und somit auch im Hinblick auf die entstehenden Kosten Bestandteil des Vorsatzgerätes ist.

Die Erfindung ist nicht auf die angegebene Kombination der Merkmale der unabhängigen Patentansprüche 1 und 2 mit den Merkmalen der abhängigen Patentansprüche beschränkt. Es ergeben sich darüber hinaus weitere Möglichkeiten, einzelne Merkmale, insbesondere dann, wenn sie sich aus den Patentansprüchen, der nachfolgenden Beschreibung der Ausführungsbeispiele oder unmittelbar aus der Zeichnung ergeben, miteinander zu kombinieren. Im Übrigen soll die Bezugnahme der Patentansprüche auf die Zeichnung durch die Verwendung von Bezugszeichen den Schutzumfang der Patentansprüche auf keinen Fall auf die dargestellten Ausgestaltungsbeispiele beschränken.

Nachfolgend wird die Erfindung anhand der Zeichnungen erläutert, in denen ein Ausführungsbeispiel der Erfindung vereinfacht dargestellt ist.

Es zeigen:
- Figur 1: eine schematische Darstellung eines innerhalb eines Vorsatzgerätes angeordneten erfindungsgemäßen Antriebssystems,
- Figur 2: eine Draufsicht auf ein entsprechend ausgeführtes Antriebssystem eines an einem Schrägförderer eines Mähdreschers angebauten Vorsatzgerätes,
- Figur 3: eine separate Darstellung des Antriebs eines Querförderers und einer Pflückeinrichtung in perspektivischer Darstellung nach der Figur 2 und
- Figur 4: eine Seitenansicht des Antriebes der Pflückeinrichtung und des Querförderers für ein Vorsatzgerät nach Figur 2.

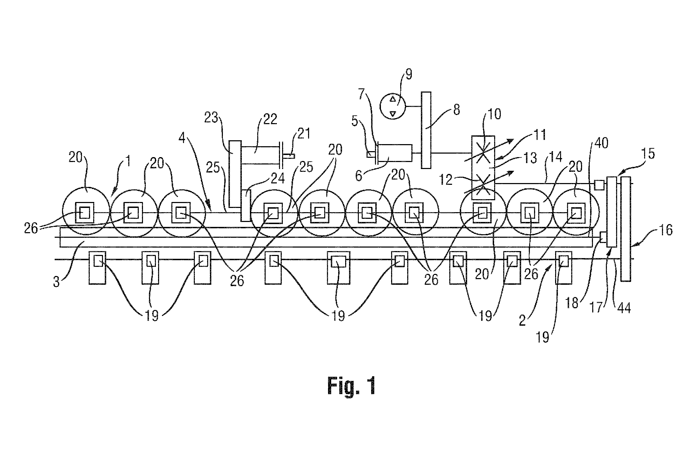

In den Figuren 1 bis 4 ist mit 1 ein Vorsatzgerät bezeichnet, das, wie insbesondere der Figur 1 zu entnehmen ist, unter anderem aus einer Pflückeinrichtung 2, einem Querförderer 3 und einer Häckseleinrichtung 4 besteht. Dabei bilden die Pflückeinrichtung 2 und der Querförderer 3 Bestandteile einer Ernteeinrichtung des Vorsatzgerätes 1, die ebenso wie die Häckseleinrichtung 4 von einem nicht näher dargestellten Mähdrescher aus angetrieben werden. Der Antrieb der Pflückeinrichtung 2 und des Querförderers 3 erfolgt von einem ersten Abtriebselement 5 des Mähdreschers aus über eine erste Gelenkwelle 6. Diese erste Gelenkwelle 6 ist über eine formschlüssige Kupplung 7 wahlweise mit dem ersten Abtriebselement 5 kuppelbar, d. h., wenn das Vorsatzgerät 1 an den Mähdrescher angebaut ist, wird die Gelenkwelle 6 über die formschlüssige Kupplung 7 trieblich mit dem ersten Abtriebselement 5 verbunden.

Die erste Gelenkwelle 6 treibt über einen Riementrieb 8 eine Hydraulikpumpe 9 an, welche für eine Druckmittelversorgung innerhalb des Vorsatzgerätes 1 vorgesehen ist. Zu diesem Zweck sind nicht näher dargestellte Hydraulikkreise vorhanden, über welche mittels entsprechender Hydraulikventile Steuerfunktionen am Vorsatzgerät 1 vorgenommen werden. Weiterhin steht die Gelenkwelle 6 mit einer Primärscheibe 10 eines Variatorgetriebes 11 in Verbindung, welches außerdem eine Sekundärscheibe 12 und einen Treibriemen 13 aufweist. Eine Ausgangswelle 14 des Variatorgetriebes 11, die von der Sekundärscheibe 12 ausgeht, führt zu einem ersten Zugmitteltrieb 15, der aus einem die Pflückeinrichtung 2 antreibenden Riementrieb 16 und einem den Querförderer 3 antreibenden Kettentrieb 17 besteht. Weiterhin ist im Antrieb des Querförderers 3 eine Überlastkupplung 18 angeordnet, die bei Überschreiten eines Drehmomentwertes selbsttätig den Antrieb des Querförderers 3 unterbricht. Weitere Überlastkupplungen 19 sind einzelnen Pflückwalzen, die noch im Zusammenhang mit den nachfolgenden Figuren erläutert werden, zugeordnet.

Dem bereits beschriebenen ersten Antriebselement 5 gegenüberliegend ist ein zweites Antriebselement 21 vorgesehen, an welchem eine zweite Gelenkwelle 22 angreift. Diese zweite Gelenkwelle 22 treibt über einen Riementrieb 23 und ein Getriebe 24 die Häckseleinrichtung 4 an. Wie aus der schematischen Darstellung nach der Figur 1 hervorgeht, gehen von dem Getriebe 24 Hauptantriebswellen 25 aus, die über in der Figur 1 nicht näher dargestellte vertikal verlaufende Messerwellen Messer 20 der Häckseleinrichtung 4 antreiben. An den Antrieben der Messerwellen, die als Winkelgetriebe ausgebildet sind, befinden sich Überlastkupplungen 26. Ein Ansprechen der Überlastkupplungen 18, 19 oder 26 kann im Übrigen durch eine nicht näher dargestellte Sensorik erfasst werden, so dass dem Fahrer in der Kabine des Mähdreschers ein Ausfall einzelner Pflückwalzen sowie einzelner Messerantriebe der Häckseleinrichtung 4 oder des gesamten Querförderers 3 signalisiert werden. Das Getriebe 24 kann im Übrigen ebenfalls als stufenlos einstellbares Getriebe ausgebildet sein. Darüber hinaus besteht die Möglichkeit, das Getriebe 24 als mehrstufiges Schaltgetriebe auszubilden.

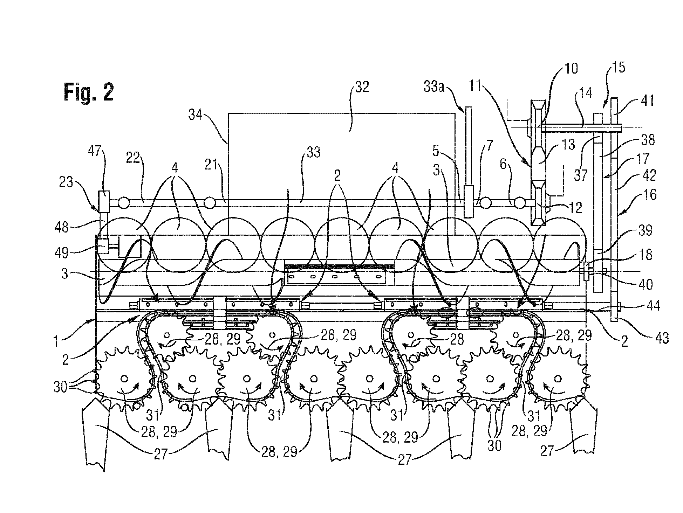

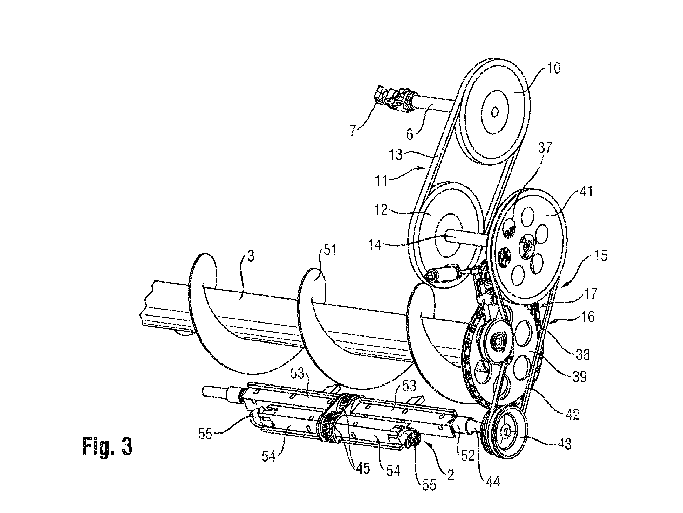

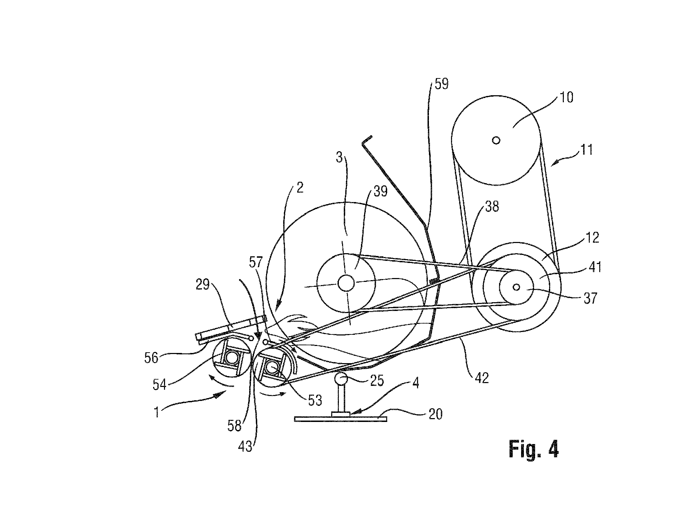

Wie weiterhin aus der Figur 2, die ein gemäß Figur 1 dargestelltes Vorsatzgerät 1 detaillierter darstellt, hervorgeht, weist dieses Vorsatzgerät 1 Halmteiler 27 auf, denen Einzugseinrichtungen 28 nachgeordnet sind, die zum Erfassen und Führen der Maisstängel dienen. Die Einzugseinrichtungen bestehen dabei aus Förderscheiben 29, die an ihrem Umfang mit Förderzinken 31 versehen sind und paarweise mit unterschiedlicher Drehrichtung angetrieben werden. Dabei bewegen die Förderzinken 30 die von ihnen erfassten Maisstängel durch einen Förderkanal 31, an dessen Ende die Maisstängel von quer zur Fahrtrichtung des Mähdreschers verlaufenden Pflückeinrichtungen 2 aufgenommen werden. Auf die Funktion dieser Pflückeinrichtungen 2 wird im Zusammenhang mit der Darstellung nach den Figuren 3 und 4 noch näher eingegangen werden. Der Figur 2 ist weiterhin die Anordnung der Häckseleinrichtung 4 zu entnehmen.

Nach der Figur 2 ist das Vorsatzgerät 1 an einen Schrägförderer 32 eines nicht näher dargestellten Mähdreschers gekuppelt. Der Schrägförderer 32 weist eine Schrägfördererwelle 33 auf, die über einen Hauptriementrieb 33a angetrieben wird und im Inneren eines Schrägförderergehäuses 34 im Einzelnen nicht dargestellte Förderketten antreibt. Dabei steht die Schrägfördererwelle 33 beidseitig aus dem Schrägförderergehäuse 34 vor und bildet die Abtriebselemente 5 und 21. An dem Abtriebselement 5 ist über die formschlüssige Kupplung 7 die erste Gelenkwelle 6 befestigt, die zu der Primärscheibe 10 des Variatorgetriebes 11 führt. Von dieser Primärscheibe 10 aus wird das Antriebsdrehmoment über den Treibriemen 13 auf die Sekundärscheibe 12 übertragen, die über die Ausgangswelle 14 mit einem Antriebsritzel 37 des zum Querförderer 3 führenden Kettentriebs 17 in Verbindung steht. Eine Kette 38 dieses Kettentriebes 17 treibt über ein Abtriebsritzel 39 eine Welle 40 des Querförderers 3 an. Parallel zu diesem Kettentrieb 17 verläuft der Riementrieb 16, der aus einer drehfest mit der Ausgangswelle 14 verbundenen Antriebsriemenscheibe 41, einem Treibriemen 42 und einer mit einer Antriebswelle 44 der Pflückeinrichtung 2 verbundenen Abtriebsriemenscheibe 43 besteht.

Ein zweites Ende der Schrägfördererwelle 33, das ebenfalls über das Schrägförderergehäuse 34 vorsteht, steht, wie bereits im Zusammenhang mit der Figur 1 erläutert, mit einem Antrieb der Häckseleinrichtung 4 in Verbindung. Zu diesem Zweck ist das entsprechende zweite Abtriebselement 21 über die zweite Gelenkwelle 22 mit einer Antriebsriemenscheibe 47 verbunden, die über einen Treibriemen 48 und eine Abtriebsriemenscheibe 49 das Getriebe 24 antreibt. Das Getriebe 24 steht seinerseits, wie zu Figur 1 erläutert, mit der quer zur Fahrtrichtung des Mähdreschers verlaufenden Hauptantriebswelle 25 der Häckseleinrichtung 4 in Verbindung.

Zur weiteren Erläuterung des Antriebs des Querförderers 3 und der Pflückeinrichtung 2 wird auf die Figur 3 verwiesen, in der diese Baugruppen der Ernteeinrichtung separat dargestellt sind. Danach weist der Querförderer 3 zwei gegenläufige Schneckenabschnitte auf, von denen in der Darstellung, in Fahrtrichtung gesehen, nur der der linken Hälfte des Vorsatzgerätes 1 zugeordnete Schneckenabschnitt 51 sichtbar ist. Ferner geht aus der Figur 3 hervor, dass die Pflückeinrichtung 2 eine Pflückerwelle 52 und auf dieser angeordnete erste Pflückwalzen 53 aufweist. Diese ersten Pflückwalzen 53 stehen antriebsmäßig über ein Zahnradpaar 45 mit zweiten Pflückwalzen 54 in Verbindung, wobei diese zweiten Pflückwalzen 54 an ihren Enden mit Schneckenabschnitten 55 zum Einziehen der Maisstängel versehen sind.

Weiterhin gehen aus der Figur 4 nochmals die entsprechende Anordnung und der Antrieb der Ernteeinrichtungen, also der Pflückeinrichtung 2 und des Querförderers 3 sowie der Häckseleinrichtung 4 hervor. Dabei ist der Figur 4 zu entnehmen, dass das Vorsatzgerät 1 im Bereich der Pflückeinrichtung 2 ein vorderes Pflückblech 56, von welchem ein Abschnitt gezeigt ist, und ein hinteres Pflückblech 57 aufweist, die derart zueinander beabstandet sind, dass sie oberhalb der Pflückwalzen 53 und 54 einen Pflückspalt 58 bilden. Der in diesen Pflückspalt 58 weisende Pfeil zeigt die Richtung, in der die Maisstängel von den Pflückwalzen 53 und 54 durch diesen gezogen werden. Außerdem geht aus der Figur 4 hervor, dass das erfindungsgemäße Variatorgetriebe 11 hinter einer Rückwand 59 des Vorsatzgerätes 1 angeordnet ist.

**Bezugszeichenliste**

| | | | |
|---|---|---|---|
| 1 | Vorsatzgerät | 32 | Schrägförderer |
| 2 | Pflückeinrichtung | 33 | Schrägfördererwelle |
| 3 | Querförderer | 33a | Hauptriementrieb |
| 4 | Häckseleinrichtung | 34 | Schrägförderergehäuse |
| 5 | erstes Abtriebselement | 37 | Antriebsritzel von 7 |
| 6 | erste Gelenkwelle | 38 | Kette |
| 7 | formschlüssige Kupplung | 39 | Abtriebsritzel von 7 |
| 8 | Riementrieb | 40 | Welle von 3 |
| 9 | Hydraulikpumpe | 41 | Antriebsriemenscheibe von 16 |
| 10 | Primärscheibe | 42 | Treibriemen von 16 |
| 11 | Variatorgetriebe | 43 | Abtriebsriemenscheibe von 16 |
| 12 | Sekundärscheibe | 44 | Antriebswelle von 2 |
| 13 | Treibriemen | 45 | Zahnradpaar |
| 14 | Ausgangswelle | 47 | Antriebsriemenscheibe |
| 15 | Zugmitteltrieb | 48 | Treibriemen |
| 16 | Riementrieb | 49 | Abtriebsriemenscheibe |
| 17 | Kettentrieb | 51 | Schneckenabschnitt |
| 18 | Überlastkupplung von 3 | 52 | Pflückerwelle von 2 |
| 19 | Überlastkupplung von 2 | 53 | erste Pflückwalzen |
| 20 | Messer von 4 | 54 | zweite Pflückwalzen |
| 21 | zweites Abtriebselement | 55 | Schneckenabschnitte von 54 |
| 22 | zweite Gelenkwelle | 56 | vorderes Pflückblech |
| 23 | Riementrieb | 57 | hinteres Pflückblech |
| 24 | Getriebe | 58 | Pflückspalt |
| 25 | Hauptantriebswellen von 4 | 59 | Rückwand |
| 26 | Überlastkupplungen von 4 | | |
| 27 | Halmteiler | | |
| 28 | Einzugseinrichtungen | | |
| 29 | Förderscheiben | | |
| 30 | Förderzinken | | |
| 31 | Förderkanal | | |

## Patentansprüche

1. Vorsatzgerät (1) zum Ernten von Mais für einen selbstfahrenden Mähdrescher mit Ernteeinrichtungen (2, 3, 28) zum Erfassen und Führen von Maisstängeln, zum Pflücken von Maiskolben und zum Fördern der gepflückten Maiskolben, welches Vorsatzgerät (1) sich über seine Breite erstreckende Einzugseinrichtungen (28), den Einzugseinrichtungen (28) in Richtung des Erntegutflusses nachgeordnete Pflückeinrichtungen (2), die im Wesentlichen aus gegenläufig rotierenden Pflückwalzen (53, 54) bestehen, sowie einen mit gegenläufigen Schneckenabschnitten (51) versehenen Querförderer (3) aufweist, über welchen die geernteten Maiskolben mittig des Vorsatzgerätes (1) zusammenführbar und dort einem Schrägförderer (32) zuführbar sind, wobei die Einzugseinrichtungen (28) und/oder die Pflückwalzen (53, 54) und/oder der Querförderer (3) über zumindest ein Abtriebselement (5) des Mähdreschers antreibbar ist bzw. sind,
**dadurch gekennzeichnet,**
**dass** das zumindest eine Abtriebselement (5) mit zumindest einem stufenlos verstellbaren Getriebe verbunden ist, welches am Vorsatzgerät (1) angeordnet ist und eine unmittelbar oder mittelbar mit einer Antriebswelle der Einzugseinrichtungen (28) und/oder einer Antriebswelle (44) der Pflückwalzen (53, 54) und/oder einer Antriebswelle (40) des Querförderers (3) und/oder einer Hauptantriebswelle einer Häckseleinrichtung (4) zum Häckseln der Maisstängel verbundene Ausgangswelle (14) aufweist.

2. Vorsatzgerät (1) zum Ernten von Mais für einen selbstfahrenden Mähdrescher mit Ernteeinrichtungen (2, 3, 28) zum Erfassen und Führen von Maisstängeln, zum Pflücken von Maiskolben und zum Fördern der gepflückten Maiskolben, welches Vorsatzgerät sich über seine Breite erstreckende Einzugseinrichtungen (28), den Einzugseinrichtungen (28) in Richtung des Erntegutflusses nachgeordnete Pflückeinrichtungen (2), die im Wesentlichen aus gegenläufig rotierenden Pflückwalzen (53,54) besteht, sowie einen mit gegenläufigen Schneckenabschnitten (51) versehenen Querförderer (3) aufweist, über welchen geerntete Maiskolben mittig des Vorsatzgerätes (1) zusammenführbar und dort einem Schrägförderer (32) zuführbar sind, wobei die Einzugseinrichtungen (28) und/oder die Pflückwalzen (53, 54) und/oder der Querförderer (3) über zumindest ein Abtriebselement (5, 21) des Mähdreschers antreibbar ist bzw. sind,
**dadurch gekennzeichnet,**
**dass** das Abtriebselement (5, 21) mit einem mehrstufigen Schaltgetriebe verbunden ist, welches am Vorsatzgerät (1) angeordnet ist und eine Ausgangswelle aufweist, die ausschließlich unmittelbar oder mittelbar mit einem Antrieb der Pflückwalzen (53, 54) und des Querförderers (3) verbunden ist.

3. Vorsatzgerät (1) nach Patentanspruch 1, **dadurch gekennzeichnet, dass** das zumindest eine stufenlos verstellbare Getriebe über eine Gelenkwelle (6) an das zumindest eine Abtriebselement (5) kuppelbar ist und über zumindest einen nachgeschalteten Zugmitteltrieb (15) zumindest eine der Ernteeinrichtungen (2, 3, 28) antreibt.

4. Vorsatzgerät (1) nach Patentanspruch 1, **dadurch gekennzeichnet, dass** das zumindest eine stufenlos verstellbare Getriebe als Variatorgetriebe (11) ausgebildet ist, welches eine Primärscheibe (10) und eine Sekundärscheibe (12) aufweist, die unmittelbar oder mittelbar am Erntevorsatz (1) gelagert sind, wobei die Primärscheibe (10) drehfest mit einer an das Abtriebselement (5) kuppelbaren Gelenkwelle (6) und die Sekundärscheibe (12) drehfest mit einem Antriebselement der Einzugseinrichtungen (28) und/oder einer der Pflückwalzen (53, 54) und/oder des Querförderers (3) und/oder der Hauptantriebswelle der Häckseleinrichtung (4) verbunden ist.

5. Vorsatzgerät (1) nach einem der Patentansprüche 1 oder 2, **dadurch gekennzeichnet, dass** ein Ende einer Schrägfördererwelle (33) als Abtriebselement (5) ausgebildet ist, an das die Gelenkwelle (6) kuppelbar ist, und dass an ein zweites Ende der Schrägfördererwelle (33) eine weitere Gelenkwelle (22) kuppelbar ist, die über einen weiteren Zugmitteltrieb (23) trieblich mit der Hauptantriebswelle (25) bzw. den Messerwellen der Häckseleinrichtung (4) verbunden ist.

6. Vorsatzgerät (1) nach einem der Patentansprüche 1 oder 2, **dadurch gekennzeichnet, dass** eine das stufenlos verstellbare Getriebe oder das Schaltgetriebe antreibende Gelenkwelle (6, 22) mit einem Antrieb einer Hydraulikpumpe (9) verbunden ist.

7. Vorsatzgerät (1) nach einem der Patentansprüche 1 oder 2, **dadurch gekennzeichnet, dass** zwischen dem Antriebselement (5) und einer Welle (40) des Querförderers (3) und/oder einem Antriebselement (44) der Pflückwalzen (53, 54) zumindest eine Überlastkupplung (40) angeordnet ist.

8. Vorsatzgerät (1) nach einem der Patentanspruch 1, **dadurch gekennzeichnet, dass** das stufenlos verstellbare Getriebe hinter eine Rückwand (59) des Vorsatzgerätes (1) angeordnet ist.

9. Vorsatzgerät (1) nach Patentanspruch 3, **dadurch gekennzeichnet, dass** die von der Sekundärscheibe (12) ausgehende Ausgangswelle (14) den Querförderer (3) über einen Kettentrieb (17) und die Pflückwalzen (53, 54) über einen Riementrieb (16) antreibt.

10. Vorsatzgerät nach Patentanspruch 1, **dadurch gekennzeichnet, dass** das zumindest eine stufenlos verstellbare Getriebe in Abhängigkeit von der Feuchtigkeit und/oder der Bestandsdichte und/oder der Stängellänge der Maispflanzen verstellbar ist.
